Europäisches Patentamt

(19) European Patent Office   (11) Publication number: **0 200 279**
**B1**
Office européen des brevets

# (12) EUROPEAN PATENT SPECIFICATION

(45) Date of publication of the patent specification:
**21.03.90**

(21) Application number: **86200739.0**

(22) Date of filing: **29.04.86**

(51) Int. Cl.⁴: **C09K 11/55, C09K 11/59,
H01J 61/44, C09K 11/79**

(54) **Luminescent alkaline earth metal silicate and low pressure mercury vapour discharge lamp comprising such a silicate.**

(30) Priority: **01.05.85 US 729454**

(43) Date of publication of application:
**10.12.86 Bulletin 86/45**

(45) Publication of the grant of the patent:
**21.03.90 Bulletin 90/12**

(84) Designated Contracting States:
**DE FR GB NL**

(56) References cited:
**GB-A- 1 205 319
GB-A- 2 003 657
US-A- 3 260 675
US-A- 4 088 599**

(73) Proprietor: **North American Philips Corporation,
100 East 42nd Street 9th Floor, New York,
N.Y. 10017(US)**

(72) Inventor: **Mc Allister, William A., c/o INT.
OCTROOIBUREAU B.V. Prof. Holstlaan 6, NL-5656 AA
Eindhoven(NL)**

(74) Representative: **Evers, Johannes Hubertus Marie et ai,
INTERNATIONAAL OCTROOIBUREAU B.V Prof.
Holstlaan 6, NL-5656 AA Eindhoven(NL)**

ACTORUM AG

## Description

This invention relates to luminescent materials, also called phosphors. More particularly, this invention relates to luminescent alkaline earth metal silicates activated by trivalent rare earth metal. Furthermore the invention relates to low pressure mercury vapour discharge lamps provided with such a luminescent silicate.

In compact low pressure mercury vapour discharge lamps, such as folded fluorescent lamps, a blend of red and green luminescing phosphors activated by trivalent europium and trivalent terbium respectively is frequently used with the blue discharge of the radiation to provide the desired white light. In other low pressure mercury vapour discharge lamps the blue radiation is provided by the use of a blue radiating phosphor.

An example of a green luminescing terbium-activated phosphor which has been employed in such lamps is the calcium and magnesium silicate activated with terbium together with monovalent lithium as a charge compensator disclosed in McAllister, U.S. Patent 3,260,675. Another green luminescing phosphor that has been employed in such lamps is the terbium-activated alkaline earth metal silicate phosphor of Suzuki et al, U.S. Patent 4,088,599. The alkaline earth metal moiety of this phosphor may be a mixture of magnesium and calcium.

An example of a red luminescing phosphor that has been employed in such fluorescent lamps is the trivalent europium-activated yttrium oxide.

Phosphors containing mixtures of europium and terbium as activators are known from McAllister, U.S. Patent 3,523,091. This patent shows lanthanum or yttrium or lanthanum and yttrium silicate phosphors activated with a mixture of trivalent europium and trivalent terbium. This patent also teaches in column 3, lines 1-18 that the atomic ratio of cations to silicon in the phosphor may be 2:1. This patent further shows in column 3 lines 22-25 that the phosphor may contain an alkaline earth metal in an amount such that the gram atom ratio of the alkaline earth metal to the yttrium or lanthanum is as high as 1/3. Additionally, this patent shows in Example 4 a yellow luminescing yttrium silicate phosphor activated by a mixture of trivalent terbium and trivalent europium.

Another patent showing a phosphor activated with both europium and terbium is U.K. Patent 1,112,277. This patent shows an aluminium silicate phosphor activated with a mixture of trivalent terbium and europium, mostly in the bivalent state.

A problem that arises when using a blend of two (red and green) luminescing phosphors is that uneven distribution of these phosphors frequently occurs, which results in colour differences along the lamp and possibly in a loss of lamp efficiency.

Besides the need to eliminate the foregoing problem, it is also highly desirable to reduce the amount of terbium required as this material is very expensive and, although used in very small amounts, has a large bearing on the production cost of the final phosphor.

## SUMMARY OF THE INVENTION

It is an object of this invention to produce an alkaline earth metal silicate phosphor which eliminates the need for blending separate red luminescing and green luminescing phosphors.

An additional object of this invention is to provide terbium-activated phosphors in which there is a decrease in the amount of terbium needed for activation.

These and other objects of the invention will be apparent from the description that follows.

According to the invention a luminescent alkaline earth metal silicate activated by trivalent rare earth metal together with monovalent lithium as a charge compensator, is characterized in that said silicate is activated by trivalent europium and trivalent terbium, and has a composition accordingy to the formula

$$(Mg_{1-x}Ca_x)_p SiO_4 : Eu_y^{+3} , Tb_z^{+3} , Li_{y+z}^{+1}$$

wherein:

$0 \leq x \leq 0.9$
$0.001 \leq y \leq 0.20$
$0,01 \leq z \leq 0.32$ and
$1.9 \leq p + 2y + 2z \leq 2.1$

The phosphors of the invention have the orthorhombic crystal structure. Upon excitation by ultraviolet radiation such as produced in a low pressure mercury vapour discharge lamp the phosphors of the invention produce green to red radiation depending on the relative concentration of the terbium and the europium activators present. By a proper balance of the terbium and europium concentrations a yellow light is produced which together with the blue light from the vapour discharge or by the addition of a blue luminescing phosphor results in the production of a desired white light. The phosphors of the invention

are $Eu^{+3}$ and $Tb^{+3}$ activated magnesium silicates wherein magnesium is replaceable by calcium in an amount up to 90 mol%. In these phosphors the molar ratio of the cations to silicon is from 1.9 to 2.1, and preferably 2. The addition of calcium together with the maintenance of the cation to silicon ratio of about 2:1 allows reduction in the amount of terbium required and results in a brightness increase.

Replacement of more than 90% of Mg by Ca is not used because at such a high Ca contents a decrease in brightness is obtained. Eu content y and Tb content z are chosen to be at least 0.001 and 0.01 respectively, because at lower values the luminous flux obtained is too low as a result of the absorption of excitation energy being too small. Eu contents y and Tb contents z above 0.20 and 0.32 respectively are not used because too low luminous luxes are obtained due to concentration quenching. Monovalent Li is used for charge compensation of the trivalent Eu and trivalent Tb and is present in equimolar amount with respect to Eu and Tb.

It should be noted that while the previously discussed McAllister U.S. Patent 3,523,091 shows a silicate activated with a mixture of terbium and europium the host of this patent differs significantly from that of the instant phosphor. Thus, in this previous patent the host is not a magnesium silicate, a part of which may be substituted by calcium, but consists of an entirely different type of material, a trivalent lanthanum, yttrium or mixed lanthanum and yttrium silicate only a third of which may be an alkaline earth metal silicate. These hosts differ from each other both chemically and in their chrystal structures to such an extent that one is not suggestive of the other. Further, the phosphor of the instant invention is much less expensive than that of the phosphor of this McAllister patent due in large extent to the fact that the host of the phosphor of the McAllister patent contains expensive yttrium or lanthanum while the host of the phosphor of the invention contains very much less expensive alkaline earth metals. Additionally, the light produced by the phosphor of the instant invention is significantly higher than that produced in the phosphor of this McAllister patent.

## BRIEF DESCRIPTION OF THE DRAWING

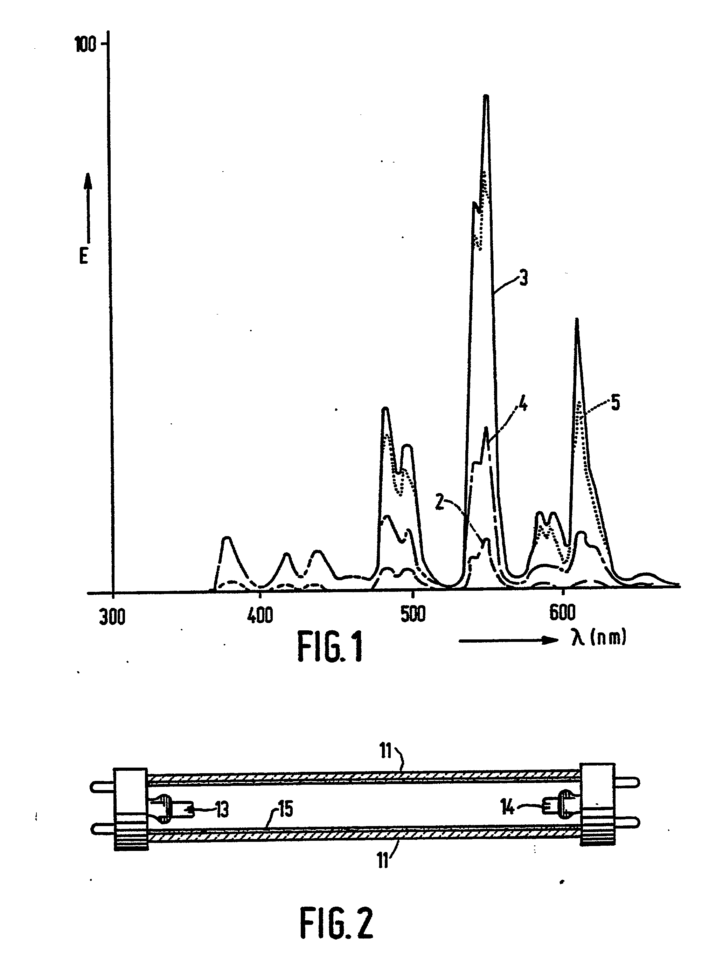

In the drawing, Fig. 1 shows the spectral energy distribution of the emission of mixed trivalent europium and trivalent terbium activated phosphors of the invention.

Fig. 2 is a diagramatic longitudinal section of a low-pressure mercury vapour discharge lamp provided with a phosphor of the invention.

## DESCRIPTION OF THE PREFERRED EMBODIMENTS

The phosphors of the invention may readily be prepared by firing a mixture of oxides of the cations or of compounds decomposable to oxides under the firing conditions, such as carbonates, together with silicic acid.

For the source of magnesium basic magnesium carbonate is preferred as it is found that with the use of this carbonate a lower firing temperature is required and the resultant phosphor exhibits an improved brightness. A slight excess of one ore more of the reactants, for example up to 5 mol% of silicic acid, may be used in order to enhance the formation reaction.

The mixture of the reactants if fired in a neutral atmosphere, preferably nitrogen, a firing temperature range of 10001300°C being preferred.

While firing may take place in one step it has been found that more uniform results may be achieved by firing the mixture in two steps ans grinding the mixture after the first firing step.

In general, the total firing time is about 1 to 3 hours, particularly good results being achieved with a firing time of two hours.

## EXAMPLE 1

1.30 moles basic magnesium carbonate (BMC), 0.52 moles calcium carbonate, 1.01 moles silicic acid, 0.02 moles terbium oxide ($tb_4O_7$), 0.005 moles europium oxide ($Eu_2O_2$) and 0.045 moles lithium carbonate were ground together. The resultant mixture was then placed in a platinum container and fired for one hour at a temperature of about 1200°C in a nitrogen atmosphere. After an hour, the fired material was reground and firing was continued for an additional hour under the same conditions.

The resultant phosphor, $Mg_{1.30}Ca_{0.52}SiO_4:Tb_{0.08}Eu_{0.01}Li_{0.09}$, has an orthorhombic crystal structure and shows a green-yellow emission upon 254 nm excitation.

By a procedure similar to that employed in Example 1 phosphors described in the following examples were prepared:

## EXAMPLE 2

$Mg_{1.58}SiO_4:Tb_{0.20}Eu_{0.01}Li_{0.21}$ was prepared starting from a mixture of 1.58 moles BMC, 1.01 moles silicic acid, 0.05 moles $Tb_4O_7$, 0.105 moles $Li_2CO_3$ and 0.005 moles $Eu_2O_3$.

3

## EXAMPLE 3

$Mg_{0.98}Ca_{0.60}SiO_4{:}Tb_{0.20}Eu_{0.01}Li_{0.21}$ was prepared starting from a mixture of 0.98 moles BMC, 1.01 moles silicic acid, 0.6 moles $CaCO_3$, 0.05 moles $Tb_4O_7$, 0.105 moles $Li_2CO_3$ and 0.005 moles $Eu_2O_3$.

The emission spectra upon excitation by 254 nm radiation of the silicates of Examples 2 and 3 are presented in Figure 1 (curves 2 and 3 respectively), emission colours being green and yellow respectively. In this Figure 1 the wave-length in nm is plotted on the abscissa and the emitted radiation energy E (in arbitrary units) is plotted on the ordinate. The emission spectra of two additional examples of the phosphors of the invention containing Ca/Mg atomic ratios of 0.3:1.28 and 0.8:0.78 ($Mg_{1.28}Ca_{0.30}SiO_4$: $Tb_{0.20}Eu_{0.01}Li_{0.21}$ and $Mg_{0.78}Ca_{0.80}SiO_4{:}Tb_{0.20}Eu_{0.01}Li_{0.21}$) are also presented in Figure 1 (curves 4 and 5, respectiveley).

A longitudinal sectional view of a low pressure mercury vapour discharge lamp employing a phosphor of the invention is shown in Fig. 2.

As shown in this figure, the lamp comprises a glass envelope 11, in which there is present a rare gas and about 40 mg of mercury. Electrodes 13 and 14 for maintaining the discharge are disposed at each end of the envelope 11.

At least a portion of the inner surface of the envelope 11 is coated with a luminescent layer 15 comprising a luminescent silicate of the invention.

The luminescent layer 15 is formed on the envelope 11 by a method conventional in the art.

The luminescent phosphors of the invention besides being of use in low pressure mercury discharge lamps may also be employed in high pressure mercury dicharge lamps, cathode-ray tubes, X-ray display devices and in other display devices.

It will be apparent that various modifications may be made to present invention without departing from the scope therof as defined by the following claims.

## Claims

1. A luminescent alkaline earth metal silicate activated by trivalent rare earth metal together with monovalent lithium as a charge compensator, characterized in that said silicate is activated by trivalent europium and trivalent terbium, and has a composition according to the formula:

$$(Mg_{1-x}Ca_x)_pSiO_4{:}\ Eu_y^{+3},\ Tb_z^{+3},\ Li_{y+z}^{+1}$$

wherein:

$0 \le x \le 0.9$,
$0.001 \le y \le 0.20$,
$0.01 \le z \le 0.32$ and
$1.9 \le p + 2y + 2z \le 2.1$

2. A luminescent alkanine earth metal silicate according to claim 1, characterized in that p+2y+2z=1.

3. A low pressure mercury vapour discharge lamp provided with a luminescent alkaline earth metal silicate as claimed in claim 1 or 2.

## Patentansprüche

1. Leuchtendes Erdalkalimetallsilikat, das mit dreiwertigem Seltenerdmetall in Verbindung mit einwertigem Lithium als Ladungsausgleich aktiviert ist, dadurch gekennzeichnet, daß das Silikat mit dreiwertigem Europium und dreiwertigem Terbium aktiviert wird und eine Zusammensetzung nach folgender Formel hat:

$$(Mg_{1-x}Ca_x)_pSiO_4{:}\ Eu_y^{+3},\ Tb_z^{+3},\ Li_{y+z}^{+1},$$

worin

$0 \le x \le 0,9$,
$0,001 \le y \le 0,20$,
$0,01 \le z \le 0,32$ und
$1,9 \le p + 2y + 2z \le 2,1$

2. Leuchtendes Erdalkalimetallsilikat nach Anspruch 1, dadurch gekennzeichnet, daß p+2y+2z = 1.

3. Niederdruckquecksilberdampfentladungslampe mit einem leuchtenden Erdalkalimetallsilikat nach Anspruch 1 oder 2.

**Revendications**

1. Silicate de métal alcalino-terreux luminescent activé par du métal des terres rares trivalent ensemble avec du lithium monovalent comme compensateur de charge, caractérisé en ce que ledit silicate est activé par de l'europium trivalent et du terbium trivalent et présente une composition répondant à la formule

$$(Mg_{1-x}Ca_x)_p SiO_4 : Eu_y^{+3} \ , \ Tb_z^{3+} \ , \ Li_{y+z}^{+1}$$

dans laquelle

$0 \leq x \leq 0{,}9$
$0{,}001 \leq y \leq 0{,}20$
$0{,}01 \leq z \leq 0{,}32$ et
$1{,}9 \leq p + 2y + 2z \leq 2{,}1$

2. Silicate de métal alcalino-terreux luminescent selon la revendication 1, caractérisé en ce que $p + 2y + 2z = 1$.

3. Lampe à décharge dans la vapeur de mercure à basse pression munie d'un silicate de métal alcalino-terreux luminescent selon l'une des revendications 1 ou 2.

FIG. 1

FIG. 2